# EUROPÄISCHE PATENTSCHRIFT

(11) **EP 2 254 691 B1**
(45) Veröffentlichungstag und Bekanntmachung des Hinweises auf die Patenterteilung: **15.06.2011**
(21) Anmeldenummer: 09721787.1
(22) Anmeldetag: 23.01.2009
(51) Int. Cl.: B01J 8/00, B01J 8/12, B01J 8/18

(54) **VERFAHREN UND VORRICHTUNG ZUR DOSIERTEN ENTNAHME EINES FEIN- BIS GROBKÖRNIGEN FESTSTOFFES ODER FESTSTOFFGEMISCHES AUS EINEM VORRATSBEHÄLTER**
METHOD AND DEVICE FOR THE METERED REMOVAL OF A FINE TO COARSE-GRAINED SOLID MATTER OR SOLID MATTER MIXTURE FROM A STORAGE CONTAINER
PROCÉDÉ ET DISPOSITIF POUR LE PRÉLÈVEMENT DOSÉ, À PARTIR D'UN RÉSERVOIR, D'UN SOLIDE OU DE MÉLANGE DE SOLIDES À GRANULOMÉTRIE FINE À GROSSIÈRE

(30) Priorität: 17.03.2008 DE 102008014475
(43) Veröffentlichungstag der Anmeldung: 01.12.2010
(73) Patentinhaber: Uhde GmbH, 44141 Dortmund (DE)
(72) Erfinder: HAMEL, Stefan, 57482 Wenden (DE); KUSKE, Eberhard, 59494 Soest (DE)
(74) Vertreter: Meinke, Dabringhaus und Partner GbR
(86) Internationale Anmeldenummer: PCT/EP2009/000404
(87) Internationale Veröffentlichungsnummer: WO 2009/115158

(56) Entgegenhaltungen:
- EP-A- 0 503 423
- EP-A- 0 626 196
- DE-A1- 2 831 208
- GB-A- 858 107

## Beschreibung

Die Erfindung richtet sich auf ein Verfahren zur dosierten Entnahme eines fein- bis grobkörnigen Feststoffes oder Feststoffgemisches aus einem Vorratsbehälter mit einer Einrichtung zur Bildung einer Wirbelschicht im Austragbereich bzw. in einer Dosierkammer des Dosierbehälters sowie auf eine entsprechende Vorrichtung zur Durchführung des Verfahrens.

Um beispielsweise feinkörnige Brennstoffe aus einem Vorratsbehälter Brennern zuführen zu können, ist es bekannt, im unteren Bereich der Vorrats- und/oder entsprechender Dosierbehälter eine Fluidisierung vorzunehmen, wobei die Förderung dann aus diesem Bereich, z.B. mittels eines Gases in entsprechende Rohrleitungen vorgenommen wird. Als Beispiel für eine derartige Verfahrensweise seien die EP 531 758 B1, EP 626 196 B1 oder die DE 28 31 208 C, DE 39 10 073 A und DE 197 15 973 A genannt. Gaszufuhrelemente, wie beispielsweise Lanzen oder am Trichterrand positionierte Rohrleitungen mit Ausblasöffnungen vorzusehen, beschreiben die DE 689 02 594 T oder die DE 41 08 048 C, um nur einige Beispiele zu nennen.

Um nicht die gesamten Volumen eines Behälters fluidisieren zu müssen, was zu sehr großem Energiebedarf und einem entsprechenden Bedarf an großen Mengen von Gasen führen würde, ist es auch bekannt, eine Fluidisierung nur im unteren Bereich eines derartigen Behälters vorzusehen, wie dies in der oben schon genannten DE 28 31 208 C beschrieben ist.

Bei sehr schwierig zu fluidisierenden Feststoffen ist es bekannt, die Fluidisierung durch Einbauten, etwa von Rührern od. dgl., zu unterstützen, um insbesondere eine möglichst homogene Fluidisierung zu erreichen. Wegen vergleichsweise hoher Drücke von bis zu 8 MPa, werden hohe Anforderungen an die Dichtungen, insbesondere der Wellendurchführungen, gestellt. Dabei führt der hohe Druck und die bewegten Teile im Feststoff zu vergleichsweise hohen Störanfälligkeiten, die die verfügbarkeit der Gesamtanlage entsprechend beeinträchtigen.

Hier setzt die Erfindung an, deren Aufgabe darin besteht, eine möglichst optimale Fluidisierung im unteren Bereich derartiger Aufnahme- bzw. Dosierbehälter zu schaffen bei Vermeidung von zusätzlichen Systemen, mechanischen Elementen oder aufwändigen Einbauten.

Mit einem Verfahren der eingangs bezeichneten Art wird diese Aufgabe gemäß der Erfindung dadurch gelöst, dass ein Gas im Bereich des Dosierkammerbodens zur Bildung einer den Feststoff auflockernden Wirbelschicht und ein Gas über Dralldüsen zur Versetzung der Wirbelschicht in Rotation zusätzlich eingebracht wird. Durch diese beiden unterschiedlichen Zwecken dienenden Gasströme ist es möglich, eine optimale Fluidisierung bei sehr homogener Ausbildung der Wirbelschicht zu erreichen, so dass damit eine homogene Entnahme von beispielsweise Brennstoff möglich ist.

Die Erfindung ist besonders vorteilhaft anwendbar zur Dosierung von feinkörnigem bis staubförmigem Brennstoff aus einem unter Druck stehenden Vorlagehälter für ein Druckvergasungsverfahren, in dem fein zerteilte Brennstoffe, z.B. staubförmige (< 0,5 mm) Brennstoffe, z.B. Kohle, Petrolkoks, biologische Abfälle bzw. Brennstoffe oder flüssige Brennstoffe, wie Öl, Teer, Raffinerierückstände und andere flüssige Rückstände, die im Vergaser zerstäubt werden können, in der Schwebe bei geringer Partikelbeladung (< 50 kg/m³; keine Wirbelschicht) mit sauerstoffhaltigen Vergasungsmitteln unter erhöhtem Druck bei Temperaturen oberhalb des Schlackeschmelzpunktes umgesetzt werden.

Ausgestaltungen der erfindungsgemäßen Verfahrensweise ergeben sich aus den Unteransprüchen. Dabei kann vorgesehen sein, dass der drallerzeugende Gasstrom tangential oder im Winkel zur Dosierbehälterwand und/oder in einem Winkel zur Horizontalebene eingebracht wird.

Dabei ist es zweckmäßig, wenn der Tangentialwinkel zwischen 0 und 80° und der zur Horizontalen eingenommene Winkel zwischen 0 und 45° eingestellt wird, wie dies die Erfindung ebenfalls vorsieht.

Vorteilhaft ist es auch, wenn die über die gesamte Gaszufuhr erreichte Geschwindigkeit bezogen auf den Querschnitt des fluidisierenden Bereiches im Dosierbehälter zwischen dem 0,5-fachen und dem 10-fachen der minimalen Fluidisiergeschwindigkeit des Feststoffes eingestellt wird, vorzugsweise zwischen dem 1-fachen und dem 5-fachen. Die oben angegebenen Maßnahmen führen zu einem optimalen Rühreffekt auf pneumatischem Wege innerhalb des zu fördernden Materiales, so dass beispielsweise über eine zentrale Auslassöffnung ein entsprechend homogener Gas-/Feststoffstrom entnommen werden kann.

Zur Lösung der Aufgabe sieht die Erfindung auch eine Vorrichtung vor, nämlich zur dosierten Abgabe von fein- bis grobkörnigem Feststoff oder Feststoffmischungen aus einem Dosierbehälter mit wenigstens einer in Schwerkraftrichtung unten liegenden Dosierkammer mit zur Bildung einer Wirbelschicht geeigneten Gaszufuhröffnungen in dem Kammerboden, die sich dadurch auszeichnet, dass neben den der Fluidisierung dienenden Gaszufuhreinrichtungen zusätzliche, die Dosierkammer beaufschlagende Dralldüsen vorgesehen sind. Wie oben schon angegeben, kann mittels der Dralldüsen ein Rühreffekt in der Wirbelschicht erzielt werden mit den damit verbundenen Vorteilen.

Ausgestaltungen der Vorrichtung ergeben sich aus den weiteren Unteransprüchen. So ist beispielsweise in Ausgestaltung der Erfindung vorgesehen, dass die Dralldüsen in der zylindrischen Wand der Dosierkammer und/oder den Fluidisierungskammerboden durchsetzend vorgesehen sind.

Zweckmäßig weisen die Dralldüsen einen tangentialen Austritt der Gasströmung bezogen auf die Kammerwand und/oder zu einer im Winkel gestellten Austrittsrichtung bezogen auf die Horizontalfläche auf, wobei der jeweilige Winkel im Bereich zwischen 0 und 45° liegen kann.

Die Erfindung sieht auch vor, dass der Dosierbehälter mit wenigstens zwei Dosierkammern im Bereich des Behälterbodens ausgerüstet ist.

Der Dosierkammerboden kann selbst ebenfalls trichterförmig ausgebildet sein mit einem Anstellwinkel von 0 bis 60°, insbesondere von 10 bis 20° gegenüber der Horizontalen.

Weitere Merkmale, Einzelheiten und Vorteile der Erfindung ergeben sich aufgrund der nachfolgenden Beschreibung sowie anhand der Zeichnung. Diese zeigt in
- Fig. 1: einen vereinfachten Schnitt durch eine erfindungs- gemäße Vorrichtung sowie in
- Fig. 2: eine Aufsicht auf die Dosierkammer mit Strömungs- pfeilen der darin gebildeten Wirbelschicht.

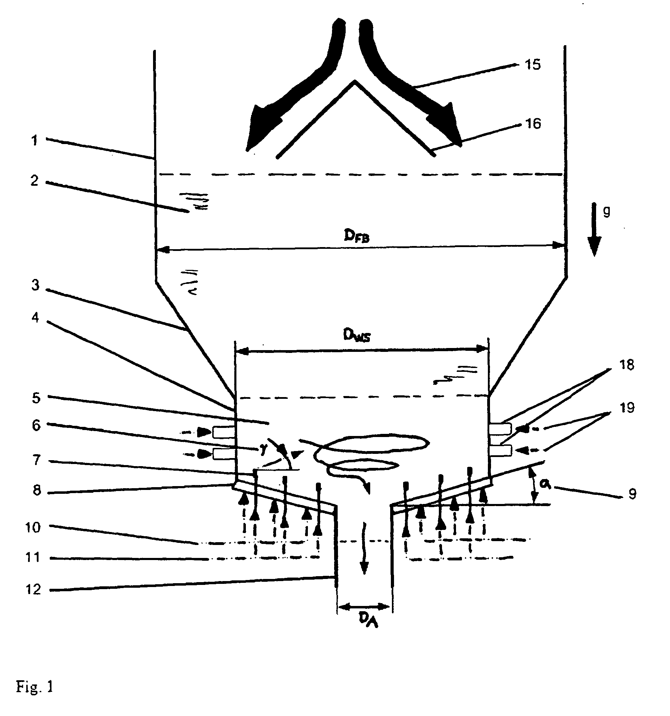

Der allgemein mit 1 bezeichnete Vorratsbehälter weist eine Feststoffschüttung 2 auf. Der Vorratsbehälter 1 ist am unteren Ende mit einem Übergangstrichter 3 ausgerüstet. Dabei ist in Fig. 1 mit D_{FB} der Durchmesser des Festbettes, mit D_{WS} der Durchmesser des Wirbelbettes und mit D_{A} der Innendurchmesser des Auslaufes bezeichnet.

Der Übergangstrichter 3 führt in eine im Wesentlichen zylindrische Dosierkammer 4, wobei in der Dosierkammer 4 eine Wirbelschicht erzeugbar ist. Der hier fluidisierte Feststoff ist mit 5 bezeichnet, wobei 6 den Ausströmwinkel bezogen auf die Horizontalebene des Gasstromes aus den mit 7 bezeichneten Dralldüsen angibt. Als Gas kann z.B. Stickstoff, Luft, Kohlendioxid, rezirkuliertes Rauchgas oder Synthesegas eingesetzt werden oder Mischungen dieser Gase.

Auch die Dosierkammer 4 weist einen leicht trichterförmigen Boden auf, der als Gasverteilboden 8 ausgebildet ist, die entsprechende Gaszufuhr zum Gasverteilboden ist mit 10 bezeichnet, die Gaszufuhr zu den Dralldüsen mit 11.

Der fluidisierte Brennstoff kann über eine zentrale Auslassöffnung 12 entnommen werden und beispielsweise Brennern zugeführt werden, was in den Figuren nicht näher dargestellt ist.

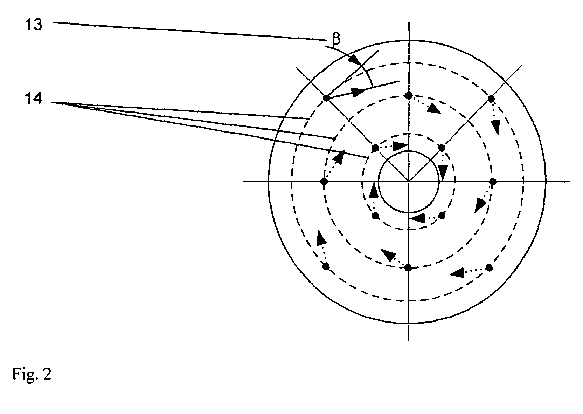

In Fig. 2 ist mit 13 der Gasaustrittswinkel bezogen auf die tangentiale Richtung angegeben, den der Gasstrom aus den Dralldüsen einnimmt, um so den fluidisierten Inhalt der Dosierkammer 4 in einer Weise umlaufen zu lassen, wie dies durch kleine Pfeile in Fig. 2 angedeutet ist. Strichpunktiert zeigt Fig. 2 auch noch die Dralldüsenkreise.

Um bei der Zufuhr des Feststoffes, mit 15 bezeichnet, den Einfüllimpuls möglichst zu minimieren, können innerhalb des Dosierbehälters 1 Einrichtungen, etwa Prallbleche od. dgl., vorgesehen sein, was mit 16 angedeutet ist.

Die Dralldüsen 7 können nicht nur den Gasverteilboden 8 durchsetzen, sie können auch in den senkrechten Wänden der Dosierkammer 4 vorgesehen sein, was mit 18 bezeichnet ist, wobei die entsprechende Gaszufuhr das Bezugszeichen 19 trägt. Der Anstellwinkel des Gasverteilbodens 8 ist mit α bzw. 9 bezeichnet. Der Gasverteilboden kann aus porösem Material gebildet sein, Bohrungen oder Düsen oder Kombinationen dieser Einrichtungen aufweisen.

Natürlich ist das beschriebene Ausführungsbeispiel der Erfindung noch in vielfacher Hinsicht abzuändern, ohne den Grundgedanken zu verlassen, insbesondere kann eine Steuerung vorgesehen sein zum taktweisen Zuführen des Fluidisierungsgases und/oder des Drallgases, die Gaszufuhren können synchron oder nacheinander gesteuert werden u. dgl. mehr.

## Patentansprüche

1. Verfahren zur dosierten Entnahme eines fein- bis grobkörnigen Feststoffes oder Feststoffgemisches aus einem Vorratsbehälter mit einer Einrichtung zur Bildung einer Wirbelschicht im Austragbereich bzw. in einer Dosierkammer des vorratsbehälters,
**dadurch gekennzeichnet,**
**dass** ein Gas im Bereich des Dosierkammerbodens zur Bildung einer den Feststoff auflockernden Wirbelschicht und ein Gas über Dralldüsen zur Versetzung der wirbelschicht in Rotation zusätzlich eingebracht wird, wobei der Feststoff in Schwerkraftrichtung nach unten aus der Dosierkammer abgezogen wird.

2. Verfahren nach Anspruch 1,
**dadurch gekennzeichnet,**
**dass** der drallerzeugende Gasstrom tangential oder im Winkel zur Dosierbehälterwand und/oder in einem Winkel zur Horizontalebene eingebracht wird.

3. Verfahren nach Anspruch 2,
**dadurch gekennzeichnet,**
**dass** der Tangentialwinkel zwischen 0 und 80° und der zur Horizontalen eingenommene Winkel zwischen 0 und 45° eingestellt wird.

4. Verfahren nach einem der vorangehenden Ansprüche,
**dadurch gekennzeichnet,**
**dass** die über die Gaszufuhr erreichte Geschwindigkeit bezogen auf den Querschnitt des fluidisierenden Bereiches im Dosierbehälter zwischen dem 0,5-fachen und dem 10-fachen der minimalen Fluidisiergeschwindigkeit des Feststoffes eingestellt wird, vorzugsweise zwischen dem 1-fachen und dem 5-fachen.

5. Vorrichtung zur dosierten Abgabe von fein- bis grobkörnigem Festoff oder Feststoffmischungen aus einem Dosierbehälter (1) mit wenigstens einer in Schwerkraftrichtung unten liegenden Dosierkammer mit zur Bildung einer Wirbelschicht geeigneten Gaszufuhröffnungen in den Kammerboden,
**dadurch gekennzeichnet,**
**dass** neben der der Fluidisierung dienenden Gaszufuhreinrichtungen (10) zusätzliche, die Dosierkammer (4) beaufschlagende Dralldüsen (7) und eine in Schwerkraftrichtung nach unten gerichtete Auslassöffnung (12) vorgesehen sind.

6. Vorrichtung nach Anspruch 5,
**dadurch gekennzeichnet,**
**dass** die Dralldüsen (7) in der zylindrischen Wand der Dosierkammer (4) und/oder den Fluidisierungskammerboden (8) durchsetzend vorgesehen sind.

7. Vorrichtung nach Anspruch 5 oder 6,
**dadurch gekennzeichnet,**
**dass** die Dralldüsen (7) einen tangentialen Austritt oder einen anderen Austrittswinkel der Gasströmung bezogen auf die Kammerwand und/oder eine im Winkel gestellten Austrittsrichtung bezogen auf die Horizontalfläche aufweisen, wobei der jeweilige Winkel im Bereich zwischen 0 und 80° liegt.

8. Vorrichtung nach Anspruch 5 oder einem der folgenden,
**dadurch gekennzeichnet,**
**dass** der Dosierbehälter (1) mit wenigstens zwei Dosierkammern (4) im Bereich des Behälterbodens ausgerüstet ist.

9. Vorrichtung nach Anspruch 5 oder einem der folgenden,
**dadurch gekennzeichnet,**
**dass** der Dosierkammerboden (8) trichterförmig ausgebildet ist mit einem Anstellwinkel von 0 bis 60°, insbesondere von 10 bis 20° gegenüber der Horizontalen.

## Claims

1. A method of metered removal of a fine-grain to coarse-grain solid material or solid material mixture from a storage container comprising a device for forming a fluidised bed in the discharge region or in a metering chamber of the storage container,
**characterised in that**
a gas is additionally introduced in the region of the bottom of the metering chamber to form a fluidised bed that loosens up the solid material and a gas is additionally introduced by way of swirl nozzles to cause the fluidised bed to rotate, wherein the solid material is withdrawn from the metering chamber downwardly in the direction of the force of gravity.

2. A method according to claim 1 **characterised in that** the swirl-generating gas flow is introduced tangentially or at an angle relative to the wall of the metering container and/or at an angle relative to the horizontal plane.

3. A method according to claim 2 **characterised in that** the tangential angle is set at between 0 and 80° and the angle assumed relative to the horizontal is set at between 0 and 45°.

4. A method according to one of the preceding claims **characterised in that** the speed achieved by way of the gas feed with respect to the cross-section of the fluidising region in the metering container is set at between 0.5 times and 10 times the minimum fluidisation speed of the solid material, preferably at between 1 and 5 times.

5. Apparatus for the metered discharge of fine-grain to coarse-grain solid material or solid material mixtures from a metering container (1) comprising at least one metering chamber which is disposed downwardly in the direction of the force of gravity and which has gas feed openings into the chamber bottom, that are suitable for forming a fluidised bed,
**characterised in that**
besides the gas feed devices (10) serving for fluidisation there are provided additional swirl nozzles (7) which act on the metering chamber (4) and an outlet opening (12) directed downwardly in the direction of the force of gravity.

6. Apparatus according to claim 5 **characterised in that** the swirl nozzles (7) are provided in the cylindrical wall of the metering chamber (4) and/or passing through the fluidisation chamber bottom (8).

7. Apparatus according to claim 5 or claim 6 **characterised in that** the swirl nozzles (7) have a tangential outlet or another outlet angle for the gas flow with respect to the chamber wall and/or an outlet direction set at an angle with respect to the horizontal surface, wherein the respective angle is in the range of between 0 and 80°.

8. Apparatus according to claim 5 or one of the following claims **characterised in that** the metering container (1) is equipped with at least two metering chambers (4) in the region of the container bottom.

9. Apparatus according to claim 5 or one of the following claims **characterised in that** the metering chamber bottom (8) is of a funnel-shaped configuration with a slope angle of 0 to 60°, in particular 10 to 20°, with respect to the horizontal.

## Revendications

1. Procédé pour le prélèvement dosé, à partir d'un récipient de réserve, d'un solide ou d'un mélange de solides à granulométrie fine à grossière, avec un système pour former une couche d'agitation dans la zone de sortie ou respectivement dans une chambre de dosage du récipient de réserve,
**caractérisé en ce que**
on introduit un gaz dans la région du fond de la chambre de dosage pour former une couche d'agitation qui rend les solides flaconneux et on introduit en supplément un gaz via des buses de dérivation pour mettre la couche d'agitation en rotation, les matières solides étant soutirées vers le bas hors de la chambre de dosage dans la direction de la gravité.

2. Procédé selon la revendication 1,
**caractérisé en ce que** le courant gazeux qui produit la dérivation est introduit tangentiellement ou sous un angle par rapport à la paroi du récipient de dosage et/ou sous un angle par rapport au plan horizontal.

3. Procédé selon la revendication 2,
**caractérisé en ce que** l'angle tangentiel est réglé entre 0 et 80° et l'angle établi par rapport à l'horizontale est réglé entre 0 et 45°.

4. Procédé selon l'une des revendications précédentes,
**caractérisé en ce que** la vitesse atteinte via l'alimentation de gaz est réglée, par référence à la section de la région qu'il s'agit de fluidifier dans le récipient de dosage, entre 0,5 fois et 10 fois la vitesse de fluidification minimum du solide, de préférence entre 1 fois et 5 fois.

5. Appareil pour la distribution dosée, à partir d'un récipient de dosage (1), d'un solide ou de mélanges de solides à granulométrie fine à grossière, comprenant au moins une chambre de dosage située en bas dans la direction de la gravité avec des ouvertures d'alimentation en gaz, appropriées pour la formation d'une couche d'agitation, dans le fond de la chambre,
**caractérisé en ce que**
outre les moyens d'alimentation en gaz (10) servant à la fluidification, il est prévu des buses de dérivation supplémentaires (7) qui attaquent la chambre de dosage (4), et une ouverture de sortie (12) dirigée vers le bas dans la direction de la gravité.

6. Appareil selon la revendication 5,
**caractérisé en ce que** les buses de dérivation (7) sont prévues dans la paroi cylindrique de la chambre de dosage (4) et/ou dans le fond (8) de la chambre de fluidification, de manière traversante.

7. Appareil selon la revendication 5 ou 6,
**caractérisé en ce que** les buses de dérivation (7) présentent une sortie tangentielle ou un angle de sortie différent pour le flux de gaz par référence à la paroi de la chambre et/ou une direction de sortie établie sous un angle par rapport à la surface horizontale, tel que l'angle respectif est dans la plage entre 0 et 80°.

8. Appareil selon la revendication 5 ou selon l'une des suivantes,
**caractérisé en ce que** le récipient de dosage (1) est équipé d'au moins deux chambres de dosage (4) dans la région du fond du récipient.

9. Appareil selon la revendication 5 ou selon l'une des suivantes,
**caractérisé en ce que** le fond (8) de la chambre de dosage est réalisé en forme d'entonnoir, avec un angle incident de 0 à 60°, en particulier de 10 à 20° par rapport à l'horizontale.
